Europäisches Patentamt

European Patent Office

Office européen des brevets

(11) Publication number: **0 271 910**
**A2**

# EUROPEAN PATENT APPLICATION

(21) Application number: 87118757.1

(22) Date of filing: 17.12.87

(51) Int. Cl.4: **G06F 11/00**

(30) Priority: **19.12.86 JP 301306/86**

(43) Date of publication of application:
**22.06.88 Bulletin 88/25**

(84) Designated Contracting States:
**DE FR GB IT**

(71) Applicant: **HITACHI, LTD.**
**6, Kanda Surugadai 4-chome Chiyoda-ku**
**Tokyo 100(JP)**

Applicant: **HITACHI MICROCOMPUTER**
**ENGINEERING LTD.**
**1479, Josuihon-cho**
**Kodaira-shi Tokyo(JP)**

(72) Inventor: **Narita, Susumu Hitachi Daini**
**Kyoshinryo**
**1-3, Higashikoigakubo-3-chome**
**Kokubunji-shi(JP)**
Inventor: **Hasegawa, Atsushi**
**Kopo Mine 102 20-22, Honcho-1-chome**
**Koganei-shi(JP)**
Inventor: **Masuda, Satoshi**
**188-1, Kamiokutomi**
**Sayama-shi(JP)**

(74) Representative: **Strehl, Schübel-Hopf,**
**Groening, Schulz**
**Widenmayerstrasse 17 Postfach 22 03 45**
**D-8000 München 22(DE)**

(54) **One-chip microprocessor.**

(57) A microprocessor can stop a program by an address or data under a complex break condition. A break function as a debugging tool which is more easy to use for a user of the microprocessor is provided.

FIG. 1

# ONE-CHIP MICROPROCESSOR

## BACKGROUND OF THE INVENTION

The present invention relates to a microprocessor, and more particularly to a microprocessor having a break function for debugging a software of the microprocessor.

As an integration density of the microprocessor increased, many components of a computer system have become accommodated in the microprocessor. Recently, a microprocessor which accommodates an instruction/data cache memory and a memory management mechanism has been known.

A high speed is attained by accommodating such components in a chip, but it also causes difficulty in debugging a software because, since all processes are carried out in the chip, a state in the course of processing cannot be readily observed externally of the chip even if such observation is necessary for debugging the software.

Let us assume that a state of the microprocessor is to be observed by temporarily stopping the process in the course of execution of a program. If there is no cache memory in the chip, the current instruction being executed can be determined by checking address pins of the chip. However, if the cache memory is included, the instruction address does not appear on the address pins of the chip when the instruction is in the cache memory. This makes the softwear debugging very difficult.

A microprocessor having an address monitor function has been proposed. A user of such a microprocessor can stop the program at any point. The microprocessor has a user-settable register. The user sets an address of an instruction in the program into this register to specify the break point (stop point).

The break function which uses the address is disclosed in (1) IEEE Micro, Dec. 1985, pages 8 and 9, (2) Introduction to The NS16000 Architecture, Jan. 1983, pages 31 and 32, and (3) NIKKEI Electronics, March 24, 1986, pages 215 and 225-226.

Those references relate to Intel 80386, NS16000 and NEC V60, respectively. In the present specification, they are abbreviated as 80386, NS16000 and V60, respectively.

The break function of the 80386 is simplest of the three. The 80386 has four debugging address registers in the microprocessor. The user can set any addresses into those registers. The 80386 compares an address to be accessed with the addresses set in four registers independently, and if there is a matching one, it stops the program temporarily and shifts the control to a debug routine.

The break function of the NS16000 is more powerful. The user of the NS16000 can specify such that the program is stopped temporarily when the matching between the address to be accessed and the address in the register occurs a specified number of times. For example, if there is a loop in the program, the program may be stopped after 50 iterations of the loop.

The V60 enhances the break function in a different manner than that of the NS16000. The user may stop the program temporarily in accordance with a type of access. The types of access include read, write and execution. For example, the program may be stopped for writing to a certain address but the program is not stopped for the reading to that address.

In this manner, the microprocessors having the break means have been known but they are not sufficient to the recent huge and complex programs. They lack consideration to a structured programming technique and an object oriented program language which are known to be effective as a structuring method for the huge program.

## SUMMARY OF THE INVENTION

It is an object of the present invention to provide a microprocessor having a break function as a powerful debugging tool which is easy to use for a user. More specifically, it is an object to provide a microprocessor having a break function which allows setting of a more complex break condition. The term "break function" is intended to mean a function of temporarily stopping execution of a program.

In order to achieve the above object, according to one aspect of the present invention, the following break means which uses the address is contained in the microprocessor. The break means has a plurality of break point registers for holding user-set addresses and a control circuit for holding history of comparison of the contents of the break point registers and an access address. The break point registers and an address signal line for the access address are connected to a comparator and a comparison result is sent to the break control circuit.

The break control circuit has a function to hold the history of the comparison results sent from the comparator. It is important to note that the history of comparisons of other break point registers is supplied to a circuit which determines whether the break condition is met or not. In the prior art system, the respective break point registers are independent and merely arranged in parallel. In the present invention, the history of other break point registers is utilized to define a more complex break condition.

In one embodiment, owing to the break means which uses the address, if an address set in a first break point register is accessed after an address set in a second break point register has been accessed, the program may be stopped. This is effective when breaking is desired in a branch to a subroutine after a specific subroutine has been called. An address of an instruction which calls the subroutine is set in the first break point register, and an address of an instruction which instructs return from the subroutine is set in the second break point register. A break condition is set such that the program is stopped when the second break point register is hit after the first break point register has been hit. When the first break point register is hit in the execution of the program, the break control circuit holds it as history. Thereafter, the second break point register is hit in the return from the subroutine, and the program is stopped. Under this condition, the program is not stopped when the second break point register is hit before the first break point register is hit.

As alternate means for achieving the object of the present invention according to another aspect of the present invention, break means which uses data in place of the address used in the first means is contained in the microprocessor. In the break means which uses data, the address in the first means has been replaced by the data. Unlike the break by the address, the break by the data in an external circuit of the chip has been too complex in the prior art system because the data requires alignment. For example, the data is simply represented in 32 bits in the chip and it can be readily compared with the content of the register. However, there are data of different lengths such as 8 bits, 16 bits and 32 bits externally of the chip and hence it is not possible to stop by simply comparing them. In another embodiment of the present invention an aligner is provided for aligning bit length in order to allow the break function by the data in the chip.

The components of the break means which uses data are basically same as those of the break means which uses the address. Only difference is that the data is compared with the content of the break point register (which holds not the address but the data). The operation is similar to that of the break by address.

In the break means which uses the address and the break means which uses data, the function of the comparators (whether to detect only matching or compare magnitudes) and the number of comparators (whether as many comparators as the number of break point registers are used or the comparator is switched by a selector) may be arbitrary.

## BRIEF DESCRIPTION OF THE DRAWINGS

Fig. 1 shows a configuration of break means of a microprocessor in embodiment 1 of the present invention.

Fig. 2 shows a detailed configuration of a break controller and a feedback controller when an input is used as an address in Fig. 1.

Fig. 3 shows four modes selectable in the configuration of Fig. 2.

Fig. 4 shows a configuration of break means of the microprocessor in embodiment 2 of the present invention.

Fig. 5 shows modes selectable in the configuration of Fig. 4.

## DESCRIPTION OF THE PREFERRED EMBODIMENTS

### EMBODIMENT 1

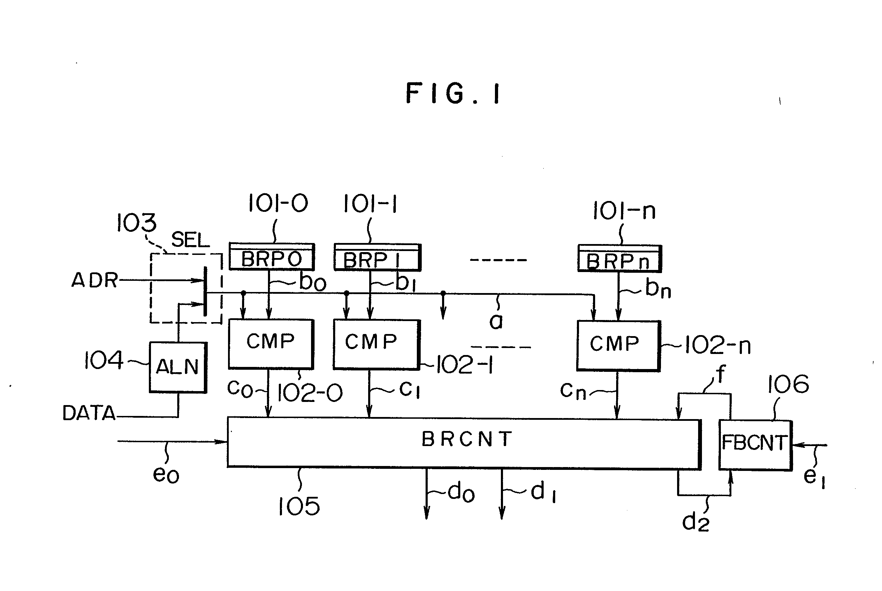

Fig. 1 shows a configuration of an embodiment 1 of the present invention. In the present embodiment, an input signal $\underline{a}$ may be switched to data or address by a selector 103. Thus, either one of the break means which uses the address and the break means which uses data described above can be attained by switching. Addresses or data to be compared are held in $\underline{n}$ break point registers BRPi ($i = 0, 1, 2, ...n$) 101-$\underline{0}$ to 101-n (hold means). The contents of BRPi are set by a user. Outputs $b_i$ of BRPi are supplied to $\underline{n}$ comparators CMP 102-0 to 102-n which receive $\underline{a}$ at their other inputs. The input $\underline{a}$ is either an address ADR or a data DATA aligned by an aligner ALN (104), and it is supplied from the selector SEL. The sizes (bit widths) of $b_i$ and $\underline{a}$ are equal. The aligner ALN has a function to receive various sizes of data and output them in one size. For example, it sign-expands or zero-expands 8, 16 and 32-bit data into 32-bit data. The comparators CMP (102-0 ...102-n) compare $\underline{a}$ and $b_i$ and produce signals $C_i$ indicating matching or magnitude comparison result. Since the hardware of CMP significantly varies depending on whether it detects only matching or compares the magnitudes, it is practical to provide the magnitude compare function to only limited ones of $\underline{n}$ CMPs so that other CMPs detect only matching.

Outputs $C_i$ from the $\underline{n}$ CMPs are supplied to a break controller BRCNT (105). History information $d_2$ to be held is supplied to and held by a feedback controller FBCNT (history hold means 106). The held history is an input $f$ to BRCNT. Control signals $e_0$ and $e_1$ to BRCNT and FBCNT are supplied. BRCNT is a state machine which receives those signals, and which may comprise a random logic, a PLA or a ROM. An output $d_0$ from BRCNT is a break signal, and an output $d_1$ is a signal informing that a specified condition has been met. Depending on the control signal, $d_0$ may not be asserted even if $d_1$ is asserted.

It is a feature of the present invention that the user can set a break condition which uses history of comparisons of different break point registers. In the following example, the output $f$ of FBCNT is prepared based on an output $c_0$ of CMP. When the user sets BRCNT to a sequential break mode, signals $d_0$ and $d_1$ are prepared based on the signals $f$ and $c_1$.

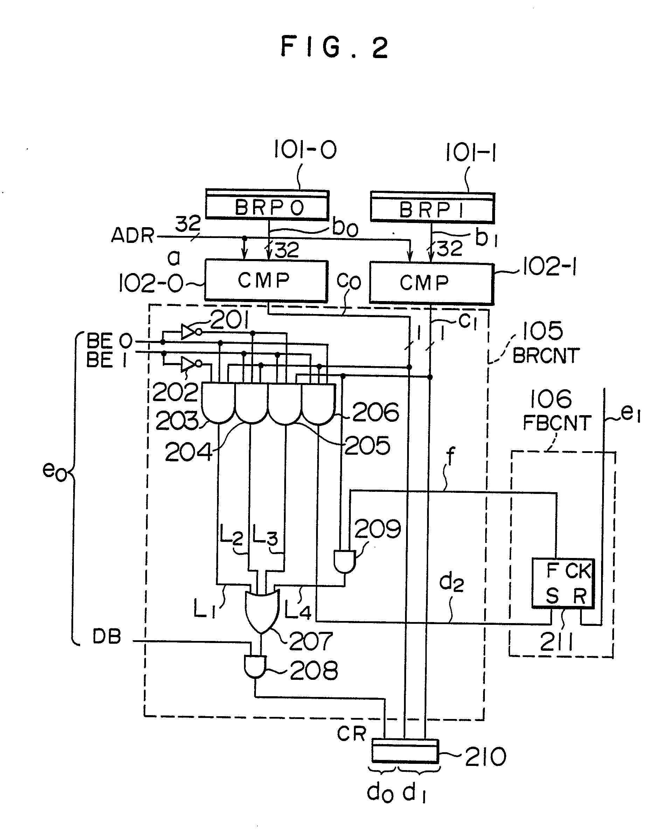

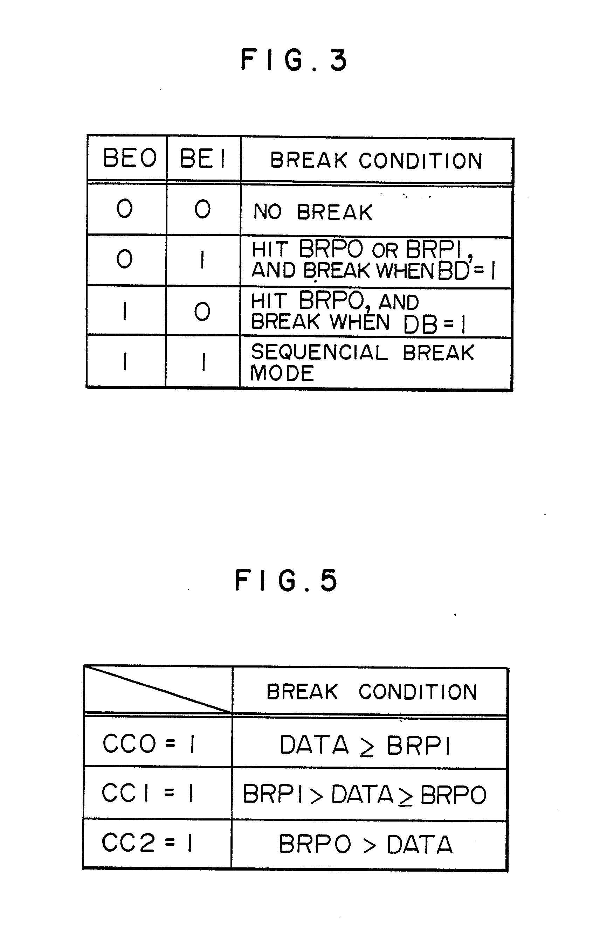

Fig. 2 shows a detailed configuration of the break controller 105 and the feedback controller 106 when addresses are compared and two break point registers are provided. Addresses are set in BRPi and an address ADR is supplied to the respective CMPs. Each CMP compares $a$ with $b_i$, and if they match, produces a "1" output at $c_0$ or $c_1$. Two bits $d_1$ in a control register CR 210 indicate the compare result. The break signal $d_0$ is also in CR 210. The signal $d_0$ is asserted when the input $c_0$ or $c_1$ which meets a condition specified by the control signal $f$ to BRCNT and $e_0$ comprising control signals BE0, BE1 and DB is supplied, where DB is a control signal for permitting the break, BE0 and BE1 are signals for specifying the break condition and $f$ is history information supplied from FBCNT to BRCNT. An internal state of FBCNT is cleared by a control signal $e_1$. Fig. 3 shows conditions specified by BE0 and BE1. When BE0 is "1" and BE1 is "1", the sequential break mode is set. In this mode, the history of comparisons of BRP0 is used and the program is stopped when BRP1 and the address match. In the sequential break mode, when BRP0 and ADR match, $c_0$ is "1", an input S to F/F 211 in FBCNT is "1" and an output F of F/F 211 is "1". Thereafter, if the address ADR changes several times and matches with the content of BRP1 101-1, then $c_1$ is "1". When the output of F/F 211 is "1" and $L_1$ is "1", $L_4$ is "1". If DB is now "1", the break signal $d_0$ is asserted. Whatever times BRP0 101-0 may be hit, or even if BRP1 101-1 is hit before BRP0 101-0 is hit, the program is not stopped. The program is stopped when BRP1 101-1 is hit only if BRP0 101-0 has been hit previously. The above sequence is attained by F/F 211 and logic gates 201 to 209. Of the four modes defined by BE0 and BE1, only the sequential mode has the condition which uses the history.

EMBODIMENT 2

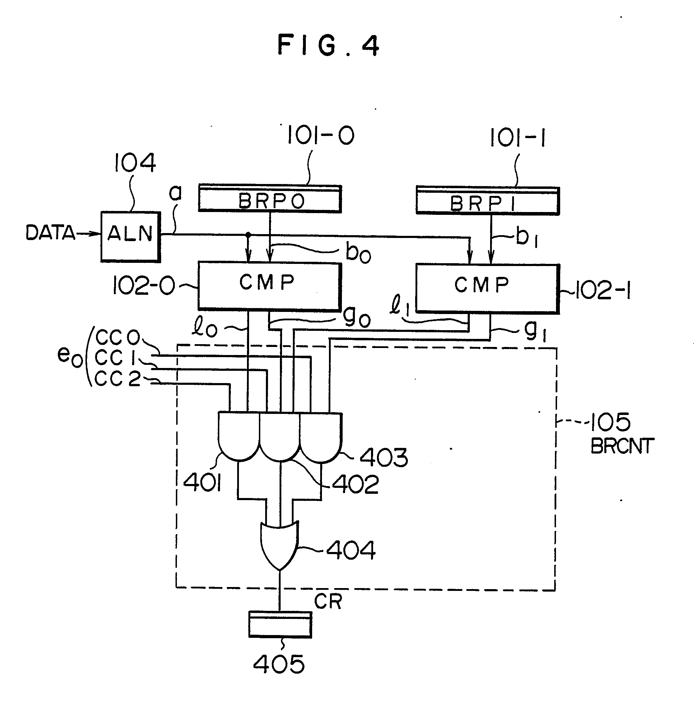

Fig. 4 shows a configuration of embodiment 2 of this invention for data break and data retrieval. In the present embodiment, each of the comparators CMP has a function to compare magnitudes, and a compare result is given by two outputs $l_i$ and $g_i$.

For the break by data by the break means which uses data described above, the data break circuit may be used for data retrieval. In this case, the control is not shifted to the debug routine by the break, but the compare result is simply reflected to a flag in the microprocessor and normal processing is continued.

Data is set in BRPi and it is compared with the data $a$ from the aligner 104. When $a < b_0$, $a \geq b_0$, $a < b_1$ and $a \geq b_1$ are met, then $l_0$, $g_0$, $l_1$ and $g_1$ are "1", respectively. CC0, CC1 and CC2 are control signals which indicate break conditions. Fig. 5 shows the conditions specified by CC0, CC1 and CC2. For example, when BRPi is a 32-bit register and a total number of numerals in the range of 1000 to 10000 among positive integers 0 to $2^{30}$ - (MSB is a sign bit) which can be expressed by 32 bits is to be counted, the operation is as follows.

CC0, CC1 and CC2 are set to zero and CR 405 is cleared. CR 405 is supplied to an execution controller as a flag and a conditional branch takes place depending on the flag. Then, BRP0 is set to 1000, BRP1 is set to 10000 and CC1 is set to "1". Then, compare data DATA is received from ALN 104 and CR 405 is set after a predetermined operation time. If $1000 \leq DATA \leq 10000$, then CR = "1". The execution unit thus increments a specified register by one to count the total number. Since DATA is supplied from the aligner, the 8, 16 and 32-bits data can be uniformly handled.

## Claims

1. A one-chip microprocessor comprising:
   (a) a plurality of hold means (101) for holding addresses or data;
   (b) compare means (102) for comparing the contents of said hold means with an address or data;
   (c) history hold means (106) for holding history of said compare means;
   (d) control means (105) for producing an output signal when a predetermined condition is met in accordance with signals from said compare means and said history hold means; and
   (e) set means for setting said predetermined condition into said control means.

2. A one-chip microprocessor according to Claim 1, further comprising:

(f) means (103) for selectively supplying addresses or data to said compare means.

3. A one-chip microprocessor according to Claim 1 or Claim 2, further comprising:

(g) alignment means (104) for aligning bit lengths of the data to a predetermined bit length.

4. A one-chip microprocessor according to Claim 1, wherein a plurality of said compare means (105) are provided.

5. A one-chip microprocessor according to any of the Claims 1 to 4, wherein said compare means has a function to compare magnitudes of input signals.

6. A one-chip microprocessor comprising:

(a) a plurality of hold means (101) for holding addresses or data;

(b) compare means (102) for comparing the contents of said hold means with an address or data;

(c) history hold means (106) for holding history of said compare means; and

(d) control means (105) for producing an output signal when the address or data held in second hold means is accessed after the address or data held in first hold means has been accessed.

7. A one-chip microprocessor comprising:

(a) a plurality of hold means (101) for holding addresses or data;

(b) a plurality of compare means (102) for comparing the contents of said hold means with an address or data;

(c) history hold means (106) for holding history of said compare means; and

(d) control means (105) for producing an output signal by using at least a signal supplied from a specific one of said hold means through a specific one of said compare means and a signal held in said history hold means from other of said hold means through other of said compare means.

# FIG. I

0 271 910

# FIG. 2

0 271 910

# F I G . 3

| BEO | BEI | BREAK CONDITION |
|:---:|:---:|---|
| O | O | NO BREAK |
| O | I | HIT BRPO OR BRPI, AND BREAK WHEN $BD = I$ |
| I | O | HIT BRPO, AND BREAK WHEN $DB = I$ |
| I | I | SEQUENCIAL BREAK MODE |

# F I G . 5

| | BREAK CONDITION |
|:---:|:---:|
| $CCO = I$ | $DATA \geq BRPI$ |
| $CCI = I$ | $BRPI > DATA \geq BRPO$ |
| $CC2 = I$ | $BRPO > DATA$ |

# FIG. 4